(19) **Europäisches Patentamt / European Patent Office / Office européen des brevets**

(11) **EP 2 733 388 B1**

(12) **EUROPEAN PATENT SPECIFICATION**

(45) Date of publication and mention
of the grant of the patent:
**16.09.2015  Bulletin 2015/38**

(21) Application number: **11869294.6**

(22) Date of filing: **11.07.2011**

(51) Int Cl.:
**F16H 57/02** *(2012.01)*

(86) International application number:
**PCT/JP2011/065828**

(87) International publication number:
**WO 2013/008308 (17.01.2013 Gazette 2013/03)**

(54) **POWER TRANSMISSION DEVICE FOR VEHICLE**

GETRIEBEVORRICHTUNG FÜR EIN FAHRZEUG

DISPOSITIF DE TRANSMISSION D'ÉNERGIE POUR VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.05.2014  Bulletin 2014/21**

(73) Proprietor: **Toyota Jidosha Kabushiki Kaisha
Toyota-shi, Aichi 471-8571 (JP)**

(72) Inventors:
• **TAMURA Naoki
Toyota-shi
Aichi 471-8571 (JP)**

• **SHIMIZU Takashi
Toyota-shi
Aichi 471-8571 (JP)**

(74) Representative: **D Young & Co LLP
120 Holborn
London EC1N 2DY (GB)**

(56) References cited:
JP-A- 2008 025 768    JP-U- 53 147 377
JP-U- 55 127 622      JP-U- 61 191 558
JP-U- H01 131 066     JP-U- S59 182 429
US-A1- 2002 017 159   US-A1- 2008 258 569
US-A1- 2009 241 727

## Description

TECHNICAL FIELD

The present invention relates to a power transmission system for a vehicle, and in particular relates to a power transmission system for a vehicle that has a bowl-shaped peripheral wall for housing a power transmission member.

BACKGROUND ART

A power transmission system for a vehicle that has a bowl-shaped peripheral wall for housing power transmission members such as a plurality of gears, a clutch, and a torque converter has been well known. For example, in Patent Document 1, a belt-type continuously variable transmission 18, a torque converter 14, and the like are housed in a case 50 that is formed of a mission case 54 and a torque converter case 52 (torque converter housing). The torque converter case 52 for housing the torque converter 14 has the bowl-shaped peripheral wall.
The closest prior art document US 2009/0241727 A1 relates to a transmission case

PRIOR ART DOCUMENT

PATENT DOCUMENT

Patent Document 1: Japanese Patent Application Publication No. 2009-024764 (JP 2009-024764 A)

SUMMARY OF THE INVENTION

Aspects are set out in the claims.

PROBLEM TO BE SOLVED BY THE INVENTION

It has been known that vibration occurs in a belt-type continuously variable transmission such as the one disclosed in Patent Document 1 when a transmission belt formed by stacking thin metal plates rotates and the metal plates bite into a pulley. The vibration is transmitted to a transaxle case via a shaft, namely an axis. A torque converter housing as a part of the transaxle case generally has a bowl-shaped peripheral wall for housing a torque converter, and it is known that a circular standing wave mode is generated in which vibration nodes and antinodes appear alternately on a circumference when the high frequency vibration of about 3 to 5 kHz is transmitted to the bowl-shaped peripheral wall. It has been a problem that the occurrence of the circular standing wave mode causes a surface of the bowl-shaped peripheral wall to vibrate and subsequently generate noise.
In order to solve the above problem, it is considered to provide a rib on the entire surface of the bowl-shaped peripheral wall so as to increase the rigidity; however, this does not produce a solution to the root of the problem because the circular standing wave mode is still generated at different frequencies. If the rib is provided on a portion of the circumference of the bowl-shaped peripheral wall, the vibration is increased in a portion where the rib is not provided. Meanwhile, it can also be considered to thicken the bowl-shaped peripheral wall. However, this leads to an increased weight of the torque converter housing. If the bowl-shaped peripheral wall is partially thickened, the vibration is increased in a portion where the wall is not thickened. The description has been made so far on the torque converter housing for housing the torque converter as an example; however, any component or device that has the bowl-shaped peripheral wall can have the same problem. Because the vibration is transmitted to the bowl-shaped peripheral wall during power transmission, not only the belt-type continuously variable transmission but also power transmission systems including a geared automatic transmission, a power transmission system of hybrid type, and the like can possibly have the same problem.
The present invention has been made in view of the above circumstances and therefore has an object to provide a structure of the power transmission system for a vehicle that has the bowl-shaped peripheral wall for housing the power transmission member, the structure capable of inhibiting the circular standing wave mode that is generated in the bowl-shaped peripheral wall during the power transmission.

MEANS FOR SOLVING THE PROBLEM

In order to achieve the above object, a gist of the invention discloses the features of claim 1.

EFFECTS OF THE INVENTION

With such a structure, a resonant frequency is increased in a surface of the bowl-shaped peripheral wall that is provided with the rigidity increasing section, and the resonant frequency is reduced in a surface of the bowl-shaped peripheral wall that is provided with the mass section. Just as described, it is possible to inhibit excitation of the circular standing wave that is generated in the bowl-shaped peripheral wall by changing the resonant frequency between the surface of the bowl-shaped peripheral wall provided with the rigidity increasing section and the surface of the bowl-shaped peripheral wall provided with the mass section.
The rigidity increasing section is preferably a rib that is provided in the surface of the bowl-shaped peripheral wall, and the mass section is preferably a mass body that is provided in the surface of the bowl-shaped peripheral wall. With such a structure, the rigidity of the bowl-shaped peripheral wall that is provided with the rib is increased, and the mass of the bowl-shaped peripheral wall that is provided with the mass body is increased. Therefore, the resonant frequency can be changed according to portions of the peripheral wall.

The bowl-shaped peripheral wall preferably constitutes the torque converter housing that houses the torque converter that is connected to the belt-type continuously variable transmission so as to enable power transmission. The rigidity increasing section is provided in a vehicle upper wall of the torque converter housing, and the mass section is provided in a vehicle front wall of the torque converter housing. With such a structure, a fourth circular standing wave mode in which the vehicle front wall of and the vehicle upper wall serve as vibration antinodes can be inhibited effectively.

A rigidity increasing section and the mass section are preferably provided in an outer peripheral surface of the bowl-shaped peripheral wall. With such a structure, because a space is formed in the outer peripheral surface of the bowl-shaped peripheral wall, the rigidity increasing section and the mass section can easily be provided by utilizing the space.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

> FIG. 1 is a view for showing essential components of a power transmission system for a vehicle to which the invention is suitably applied;
> FIG. 2 is a view for explaining circular standing wave modes that are generated in a housing in FIG. 1;
> FIG. 3 is an external view of the power transmission system in FIG. 1;
> FIG. 4 is a simplified view of a bowl-shaped portion of the housing in FIG. 1, that is, a portion for housing a torque converter;
> FIG. 5 is a view for showing a state in which a rib is provided in a vehicle upper wall and a mass is provided in a vehicle front wall of the housing shown in FIG. 1; and
> FIG. 6 is a graph for showing a result of an experiment to measure a level of a sound pressure that is generated in the housing configured as in FIG. 5.

MODES FOR CARRYING OUT THE INVENTION

A description will hereinafter be made in detail on an embodiment of the present invention with reference to the drawings. It should be noted that the drawings are either simplified or modified for the following embodiment and thus a dimensional ratio, shape, and the like of each component are not necessarily illustrated in a precise manner.

EMBODIMENT

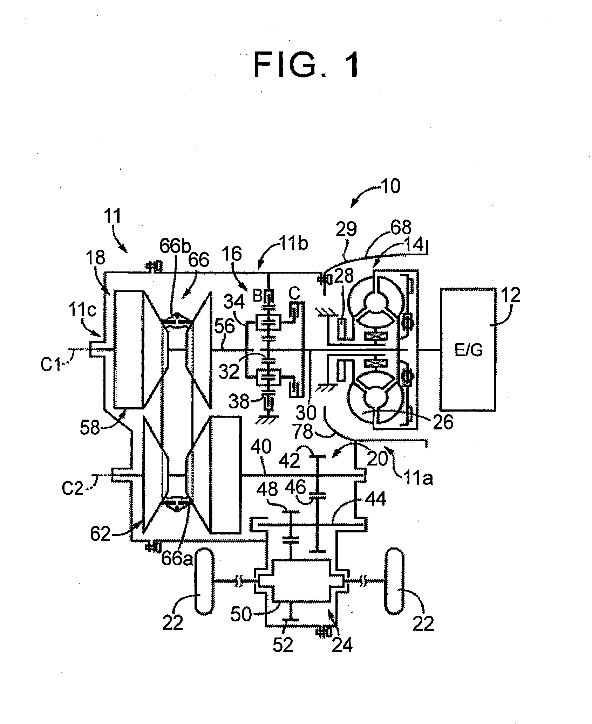

FIG. 1 is a view for showing essential components of a power transmission system for a vehicle 10 (hereinafter a power transmission system 10) to which the invention is suitably applied. In FIG. 1, the power transmission system for a vehicle 10 is adopted in a FF (front-engine, front-wheel-drive) vehicle and connected to an engine 12 that has been well known as a vehicle drive source. In FIG. 1, the top of the drawing corresponds to a front side of the vehicle, and the bottom of the drawing corresponds to a rear side of the vehicle.

The power transmission system 10 includes in a transaxle case 11: a torque converter 14 that has been well known as a fluid transmission device for transmitting torque from an engine 12 with a fluid serving as a medium; a forward/reverse travel switching device 16 that switches a rotational direction of the torque transmitted from the torque converter 14 between a rotational direction for forward travel and a rotational direction for reverse travel, which is opposite from the rotational direction for forward travel; a belt-type continuously variable transmission for a vehicle (hereinafter described as a continuously variable transmission) 18 that converts the torque transmitted via the forward/reverse travel switching device 16 to torque corresponding to a load; a reduction gear device 20 that is connected to a power output side of the continuously variable transmission 18; and a well-known differential gear device 24 of so-called bevel gear type that transmits the torque transmitted via the reduction gear device 20 to a right and left pair of wheels 22 while allowing a rotational difference between the wheels 22. A pump impeller 26 of the torque converter 14 described above is provided with a mechanical oil pump 28 for generating a hydraulic pressure that is used for speed changing control by the continuously variable transmission 18 and forward/reverse travel switching control by the forward/reverse travel switching device 16, for example. The transaxle case 11 is formed integrally by bolting a housing 11a that has a bowl-shaped peripheral wall 29 for housing the torque converter 14 corresponding to the power transmission member of the invention, a cylindrical case 11b that primarily houses the continuously variable transmission 18, and a cover 11c formed in a disk shape together. Since the torque converter 14 is housed inside the bowl-shaped peripheral wall 29 of the housing 11a, the bowl-shaped peripheral wall 29 functions as the torque converter housing.

The forward/reverse travel switching device 16 is configured to have a planetary gear device of double pinion type as its primary component, the planetary gear device including: a sun gear 32 that is connected to a turbine shaft 30 of the torque converter 14; a carrier 34 that is connected to a power input shaft 56 of the continuously variable transmission 18 and is selectively connected to the turbine shaft 30 via a forward travel clutch C; and a ring gear 38 that is selectively connected to the transaxle case 11 as a non-rotating member via a reverse travel brake B. The forward travel clutch C and the reverse travel brake B, just as described, are hydraulic frictional engagement devices that are frictionally engaged by receiving the hydraulic pressure from the oil pump 28. In such a forward/reverse travel switching device 16, engagement of the forward travel clutch C and disengagement of the reverse travel brake B causes the planetary gear device to rotate integrally, thereby establishing a power transmission path for forward travel. Once the power transmission path for forward travel is established, the torque transmitted from the torque converter 14 is transmitted to the continuously variable transmission 18 while keeping an original rotational direction. In addition, in the forward/reverse travel switching device 16, engagement of the reverse travel brake B and disengagement of the forward travel clutch C brings the planetary gear device into an input/output reverse rotational state, thereby establishing a power transmission path for reverse travel. Once the power transmission path for reverse travel is established, the torque transmitted from the torque converter 14 is transmitted to the continuously variable transmission 18 in a state that the rotational direction thereof is reversed. Further, disengagement of the forward travel clutch C and that of the reverse travel brake B brings the forward/reverse travel switching device 16 into a neutral state (cutoff state) in which the power transmission is cut off.

The reduction gear device 20 described above includes: a first drive gear 42 that is fitted onto an outer peripheral surface of a power output shaft 40 of the continuously variable transmission 18 in a manner incapable of relative rotation; a transmission shaft 44 that is provided in parallel with the power output shaft 40 and is rotatably supported; a first driven gear 46 that is fitted onto an outer peripheral surface of the transmission shaft 44 in a manner incapable of relative rotation and meshes with the first drive gear 42; a second drive gear 48 that is projected from the outer peripheral surface of the transmission shaft 44 to an outer peripheral side; and a second driven gear (differential ring gear) 52 that is fitted onto an outer peripheral surface of a differential case 50 of the differential gear device 24 in a manner incapable of relative rotation and meshes with the second drive gear 48, the differential case 50 being provided in parallel with the transmission shaft 44 and rotatably supported. The first drive gear 42 and the second drive gear 48, just as described, are formed to have a smaller diameter than the first driven gear 46 and the second driven gear 52. In such a reduction gear device 20, the torque transmitted from the power output shaft 40 of the continuously variable transmission 18 to the first drive gear 42 is further transmitted to the differential case 50 of the differential gear device 24 via the first driven gear 46, the transmission shaft 44, the second drive gear 48, and the second driven gear 52 during acceleration of a vehicle. On the other hand, during deceleration of the vehicle, a counter driving force that is transmitted from the right and left pair of the wheels 22 is transmitted to the power output shaft 40 of the continuously variable transmission 18 via the differential gear device 24 and the reduction gear device 20.

The continuously variable transmission 18 is connected to the torque converter 14 via the forward/reverse travel switching device 16 so as to enable the power transmission, and the power input shaft 56 and the power output shaft 40 thereof are arranged in parallel with the wheels 22 (horizontal arrangement). The continuously variable transmission 18 includes: the power input shaft 56 that is supported by the transaxle case 11 via an unillustrated pair of bearings so as to be rotatable about an axis C1; a primary pulley (input-side groove width variable pulley) 58 that is provided on an outer peripheral side of the power input shaft 56; the power output shaft 40 that is provided in parallel with the power input shaft 56 and is supported by the transaxle case 11 via an unillustrated pair of bearings so as to be rotatable about an axis C2; a secondary pulley (output-side groove width variable pulley) 62 provided on an outer peripheral side of the power output shaft 40; and a well-known endless annular transmission belt 66 that is wound around the primary pulley 58 and the secondary pulley 62 to transmit power between the pulleys by a frictional force. The transmission belt 66 includes a pair of annular rings 66a that is formed by stacking a plurality of endless annular steel strips with flexibility and a plurality of elements 66b (pieces) that is held between the pair of annular rings 66a and formed by connecting metal plates annularly in a thickness direction along the pair of annular rings 66a.

The continuously variable transmission 18 configured as above is adapted to change a gear ratio (a rotational speed of the power input shaft 56 / a rotational speed of the power output shaft 40) continuously by changing widths of a first pulley groove of the primary pulley 58 and a second pulley groove of the secondary pulley 62 and by changing a winding diameter of the transmission belt 66 on the primary pulley 58 and the secondary pulley 62. If the winding diameter of the transmission belt 66 on the primary pulley 58 is reduced and the winding diameter of the transmission belt 66 on the secondary pulley 62 is increased, a gear ratio y of the continuously variable transmission 18 is increased. On the contrary, if the winding diameter of the transmission belt 66 on the primary pulley 58 is increased and the winding diameter of the transmission belt 66 on the secondary pulley 62 is reduced, the gear ratio of the continuously variable transmission 18 is reduced.

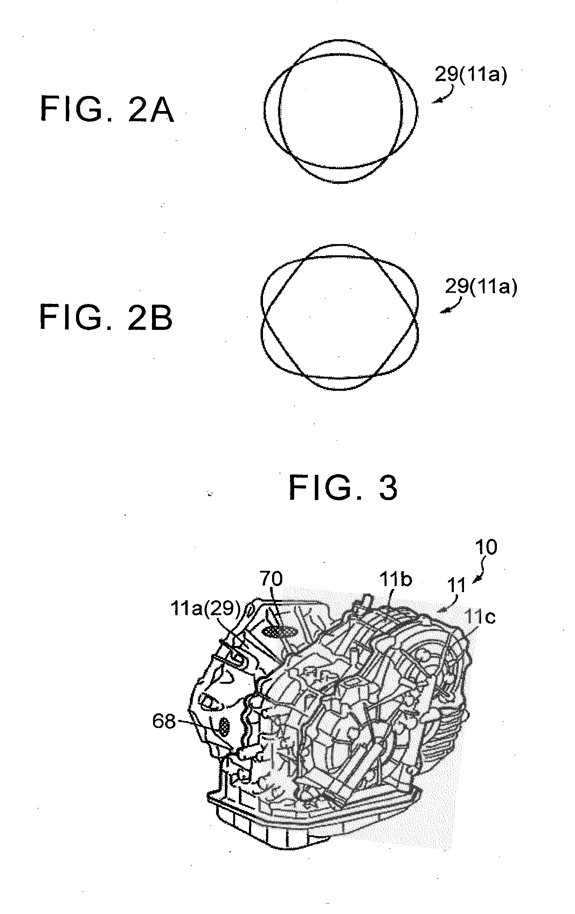

When the transmission belt 66 rotates in the continuously variable transmission 18, the elements 66b of the transmission belt bite into each of the pulleys 58, 62, thereby causing vibration. The vibration is transmitted from the power input shaft 56 and the power output shaft 40 to the transaxle case 11 via an unillustrated bearing. At this time, noise (belt noise) is generated by the vibration on a surface of the transaxle case 11. Particularly, the housing 11a that is located on the engine 12 side is formed with the bowl-shaped peripheral wall 29 for housing the torque converter 14, and a so-called circular standing wave mode in which vibration nodes and antinodes appear alternately and equally on the circumference is generated on the surface of the bowl-shaped peripheral wall 29 when the high frequency vibration of about 3 to 5 kHz is transmitted to the bowl-shaped peripheral wall 29. For instance, a fourth circular standing wave mode in which the four vibration nodes and the four vibration antinodes appear is generated as shown in FIG. 2(a), and, if the frequency increases, a sixth circular standing wave mode in which the six vibration nodes and the six vibration antinodes appear is generated as shown in FIG. 2(b). When such a circular standing wave mode is generated, it causes such a problem that the surface of the bowl-shaped peripheral wall 29 vibrates considerably, thereby raising a sound pressure level of the noise. It should be noted that the bowl-shaped peripheral wall 29 formed in the housing 11a may have a shape of a tapered tube with a large diameter or a paraboloidal shape.

FIG. 3 is an external view of the power transmission system 10. As shown in FIG. 3, the transaxle case 11 of the power transmission system 10 is formed integrally by connecting three case members, which are the housing 11a, the case 11b, and the cover 11c, together. When the engine 12 starts running, the circular standing wave mode in which a vehicle front wall 68 and a vehicle upper wall 70 serve as the vibration antinodes is generated in the bowl-shaped peripheral wall 29 of the housing 11a in the power transmission system 10. The vehicle front wall 68 is the peripheral wall 29 located on a forward travel direction side of the vehicle in the bowl-shaped peripheral wall 29, and the vehicle upper wall 70 is the peripheral wall 29 located on a vertical upper side of the vehicle in the bowl-shaped peripheral wall 29.

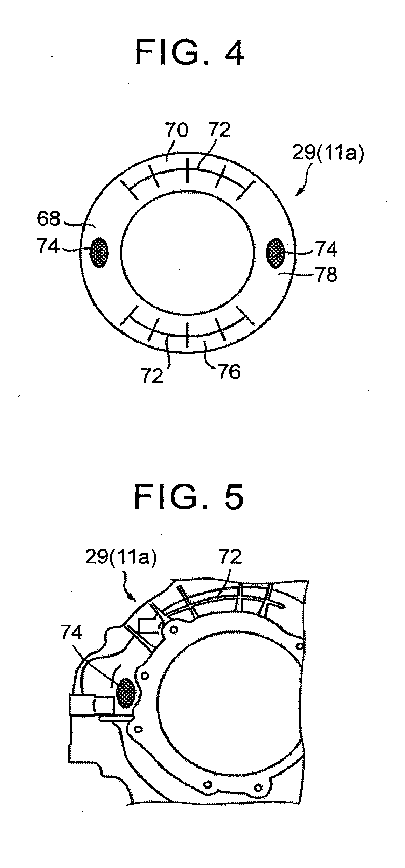

Meanwhile, in the housing 11a of this embodiment, a rib 72 for increasing rigidity and a mass 74 as a mass body are alternately provided in a circumferential direction on the surface of the bowl-shaped peripheral wall 29 of the housing 11a. FIG. 4 is a simplified view of a portion of the bowl-shaped peripheral wall 29 of the housing 11a, that is, a portion for housing a torque converter 14. FIG. 4 also corresponds to a view in which the bowl-shaped peripheral wall 29 of the housing 11a is seen from the engine 12 side. As shown in FIG. 4, the vehicle upper wall 70 and a vehicle lower wall 76 of the bowl-shaped peripheral wall 29 are provided with the rib 72. Meanwhile, the vehicle front wall 68 and a vehicle rear wall 78 of the bowl-shaped peripheral wall 29 are provided with the mass 74 as the mass body. The vehicle lower wall 76 is the peripheral wall 29 located at a vertical lower side of the vehicle in the bowl-shaped peripheral wall 29, and the vehicle rear wall 78 is the peripheral wall 29 located on a rear travel direction side of the vehicle in the bowl-shaped peripheral wall 29. It should be noted that the rib 72 corresponds to the rigidity increasing section of the invention and the mass 74 corresponds to the mass section and the mass body of the invention.

As described above, the rib 72 and the mass 74 are alternately provided in the circumferential direction on the bowl-shaped peripheral wall 29. The rib 72 increases the rigidity of the vehicle upper wall 70 and the vehicle lower wall 76 in the bowl-shaped peripheral wall 29 where the rib 72 is provided. In addition, the mass 74 increases the masses of the vehicle front wall 68 and the vehicle rear wall 78 in the bowl-shaped peripheral wall 29 where the mass 74 is provided. The mass 74 is added by means of aluminum die casting or welding, for example. The rib 72 is formed by aluminum die casting, for example.

When the bowl-shaped peripheral wall 29 is configured as above, the rigidity of a portion thereof where the rib 72 is provided is increased, and a resonance frequency f is consequentially increased in the portion. On the other hand, the resonance frequency f is reduced in a portion thereof where the mass 74 is provided. This is because the resonance frequency f presents a relationship of a following equation (1). Here, K represents the rigidity, and M represents the mass. This equation (1) indicates that the increase of the rigidity K results in the increase of the resonance frequency f while the increase of the mass M results in the reduction of the resonance frequency f.

$$f = (1/2p) \times (K/M)^{1/2} \cdots (1)$$

Accordingly, the increase of the rigidity K by the rib 72 causes the increase of the resonance frequency f on peripheral wall surfaces of the vehicle upper wall 70 and the vehicle lower wall 76 in the bowl-shaped peripheral wall 29, and the increase of the mass M causes the reduction of the resonance frequency f on the vehicle front wall 68 and the vehicle rear wall 78. If the resonance frequency f is changed according to the portions (the vehicle front wall 68, the vehicle upper wall 70, the vehicle lower wall 76, and the vehicle rear wall 78) of the thus bow-shaped peripheral wall 29 that serve as the antinodes during the generation of the circular standing wave mode, the excitation of the circular standing wave mode is avoided. When the two ribs 72 and the two masses 74 are alternately provided in the vehicle upper wall 70, the vehicle lower wall 76, the vehicle front wall 68, and the vehicle rear wall 78 of the housing 11a as shown in FIG. 4, the fourth circular standing wave mode is suitably inhibited. In other words, because the resonance frequency f differs in each of the portions that serve as the antinodes by alternately providing the rib 72 and the mass 74 in the portions serving as the four antinodes that appear in the fourth circular standing wave mode, the fourth circular standing wave mode is suitably inhibited. Also, when the sixth circular standing wave mode becomes a problem, for example, the rib 72 and the mass 74 are alternately provided in the portions that serve as the vibration antinodes of the sixth circular standing wave mode. As described above, the number of the rib 72 and that of the mass 74 are determined according to the order of the circular standing wave mode that can possibly be the problem. In addition, a shape and size of the rib 72 as well as the mass and the like of the mass 74 are determined on the basis of an experiment or calculation so that the portions on the circumference of the bowl-shaped peripheral wall 29 have different values of the resonance frequency f from each other.

The fourth circular standing wave mode is the problem in the power transmission system 10 of this embodiment, for example, and the vibration antinodes are generated in the vehicle front wall 68, the vehicle upper wall 70, the vehicle lower wall 76, and the vehicle rear wall 78 of the bowl-shaped peripheral wall 29. However, as shown in FIG. 5, a structure may be adopted in which the rib 72 is provided in the vehicle upper wall 70 of the bowl-shaped peripheral wall 29, the mass 74 is provided in the vehicle front wall 68, and neither the rib 72 nor the mass 74 is provided in the vehicle lower wall 76 and the vehicle rear wall 78. When such a structure is adopted, the vibration of the peripheral wall surfaces is increased on the vehicle lower wall 76 and the vehicle rear wall 78 in the bowl-shaped peripheral wall 29. However, even if the increased vibration on the peripheral wall surface of the vehicle lower wall 76 in the bowl-shaped peripheral wall 29 generates a radiation sound, the radiation sound is released to the ground and thus hardly affects a driver. In addition, as shown in FIG. 1, the vehicle rear wall 78 is housed in the transaxle case 11 of the power transmission system 10. Therefore, there is hardly a case that the radiation sound generated in the vehicle rear wall 78 of the bowl-shaped the peripheral wall 29 is released to the outside and affects the driver. As described above, the rib 72 or the mass 74 does not have to be provided alternately along the whole circumference of the bowl-shaped peripheral wall 29, and the rib 72 or the mass 74 may only be provided in the portion where the noise produced therein can have a significant affect on the driver. This can prevent a design change and weight increase.

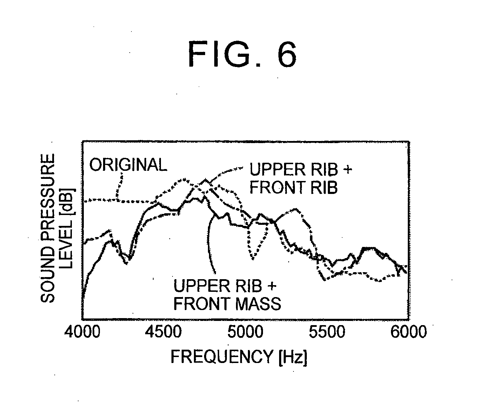

FIG. 6 shows a result of an experiment to measure the sound pressure level [dB] when the rib 72 and the mass 74 are respectively provided on the vehicle upper wall 70 and the vehicle front wall 68 of the bowl-shaped peripheral wall 29 as shown in FIG. 5. A horizontal axis represents a primary frequency [Hz] of biting of the elements 66b in the transmission belt 66, and a vertical axis represents the sound pressure level [dB] that corresponds to the noise. The primary frequency of biting corresponds to the number of bites of the elements 66b into the pulley per unit time, and the sound pressure level is a sum of the sound pressure values detected at any four points by an unillustrated microphone. The experimental result shown in a solid line is obtained in a case that corresponds to this embodiment where the rib 72 and the mass 74 are respectively provided in the vehicle upper wall 70 and the vehicle front wall 68 of the bowl-shaped peripheral wall 29. Meanwhile, an "original" experimental result shown in a broken line is obtained in a case where neither the rib 72 nor the mass 74 is provided in the vehicle front wall 68 and the vehicle upper wall 70 of the bowl-shaped peripheral wall 29. Further, an "upper rib + front rib (hereinafter described as upper/front rib)" experimental result shown in a dashed line is obtained in a case where the rib 72 is provided in both of the vehicle front wall 68 and the vehicle upper wall 70 of the bowl-shaped peripheral wall 29. In this embodiment, a mass of approximately 20 g is added as the mass 74.

As shown in FIG. 6, the original represented in the broken line shows a high value of the sound pressure level particularly at approximately 4700 Hz. On the contrary, a peak of the sound pressure level that occurs at approximately 4700 Hz is low in the upper/front rib represented in the dashed line. However, the sound pressure level of the upper/front mass is about as high as that of the original at approximately 4800 Hz. This indicates that the resonance frequency f is increased because the provision of the rib 72 increases the rigidity K and that the sound pressure level is consequentially increased in a resonance frequency band. In other words, this indicates that the value of the sound pressure level at the peak is hardly lowered even after the frequency at which the peak of the sound pressure level occurs is increased.

On the contrary, the sound pressure level of this embodiment that is represented in the solid line shows a low value at approximately 4700 Hz to 4800 Hz. This is because the resonance frequency f is increased by providing the rib 72 on the vehicle upper wall 70 and also because the resonance frequency f is reduced by providing the mass 74 on the vehicle front wall 68. Because the resonance frequency f differs in each portion of the peripheral surface as described above, the excitation of the circular each portion of the peripheral surface as described above, the excitation of the circular standing wave mode is inhibited, and the peak of the sound pressure level is lowered. In addition, it is indicated in this embodiment that the peak of the sound pressure level is lowered even when the mass 74 has the relatively small mass of approximately 20 g.

As described above, according to this embodiment, the resonance frequency f is increased in the surface of the bowl-shaped peripheral wall 29 that is provided with the rib 72, and the resonance frequency f is reduced in the surface of the bowl-shaped peripheral wall 29 that is provided with the mass 74. Thus, the excitation of the circular standing wave mode that is generated in the bowl-shaped peripheral wall 29 can be inhibited by changing the resonance frequency f between the peripheral wall surface of the bowl-shaped peripheral wall 29 that is provided with the rib 72 and the peripheral wall surface of the bowl-shaped peripheral wall 29 that is provided with the mass 74.

According to this embodiment, the rigidity K of the vehicle upper wall 70 (and the vehicle lower wall 76) of the bowl-shaped peripheral wall 29 that is provided with the rib 72 and the mass of the vehicle front wall 68 (and the vehicle rear wall 78) of the peripheral wall 29 that is provided with the mass 74 are increased. Therefore, the resonance frequency f can be changed according to these portions.

According to this embodiment, the bowl-shaped peripheral wall 29 constitutes the torque converter housing for housing the torque converter 14 that is connected to the belt-type continuously variable transmission 18 so as to enable the power transmission, the vehicle upper wall 70 of the peripheral wall 29 is provided with the rib 72, and the vehicle front wall 68 of the peripheral wall 29 is provided with the mass 74. With such a structure, the fourth circular standing wave mode in which the vehicle front wall 68 and the vehicle upper wall 70 serve as the vibration antinodes is suitably inhibited.

According to the above-mentioned embodiment, the surface of the bowl-shaped peripheral wall is provided with the rib 72 and the mass 74. With such a structure, because a space is formed in the surface of the peripheral wall, the rib 72 and the mass 74 can easily be provided by utilizing the space.

The embodiment of the present invention has been described so far on the basis of the drawings. However, the present invention can be adopted for another embodiment.

For instance, in the above-mentioned embodiment, the vehicle upper wall 70 of the bowl-shaped peripheral wall 29 is provided with the rib 72, and the vehicle front wall 68 thereof is provided with the mass 74. However, the structure is not limited thereto, and the invention may have a reverse structure. More specifically, the vehicle upper wall 70 of the peripheral wall 29 may be provided with the mass 74, and the vehicle front wall 68 thereof may be provided with the rib 72. In other words, because the purpose of the invention is to change the resonance frequency f on the circumference of the peripheral wall 29, the portions of the peripheral wall 29 can be provided with either the rib 72 or the mass 74.

In the above-mentioned embodiment, the rib 72 and the mass 74 are alternately provided in the four antinodes that are generated in the bowl-shaped peripheral wall 29 in order to inhibit the fourth circular standing wave mode. Instead, a structure in which the rib 72 and the mass 74 are alternately provided in the six antinodes that are generated in the peripheral wall surface in the sixth circular standing wave mode may be adopted in order to inhibit the sixth circular standing wave mode. Alternatively, the number of the rib 72 and that of the mass 74 can be increased to inhibit the circular standing wave mode of the subsequent order.

In the above-mentioned embodiment, the rib 72 and the mass 74 are provided on the outer peripheral surface of the bowl-shaped peripheral wall 29. Instead, a structure in which the rib 72 and the mass 74 are provided on an inner peripheral surface of the bowl-shaped peripheral wall 29 may be adopted.

In the above-mentioned embodiment, the present invention is adopted for the power transmission system 10 in which the belt-type continuously variable transmission 18 is installed. However, the present invention is not limited to the belt-type continuously variable transmission, and it can be adopted for a power transmission system that takes another driving form, such as a geared automatic transmission or a hybrid power transmission system. In other words, the present invention can appropriately be adopted for any power transmission system that includes the bowl-shaped peripheral wall.

In the above-mentioned embodiment, the mass 74 whose mass is 20 g is raised as an example. However, it is merely an example, and the mass thereof can appropriately be changed according to the size, shape, or the like of the housing.

In the above-mentioned embodiment, the bowl-shaped peripheral wall 29 is formed in the housing 11a; however, a component in which the bowl-shaped peripheral wall 29 is formed is not limited to the housing 11a. The present invention may be adopted in a case where the bowl-shaped peripheral wall is formed in either the case 11b or the cover 11c.

DESCRIPTION OF THE REFERENCE NUMERALS

    10: POWER TRANSMISSION SYSTEM FOR VEHICLE
    11: TRANSAXLE CASE
    11a: HOUSING (TORQUE CONVERTER HOUSING)
    14: TORQUE CONVERTER (POWER TRANSMISSION MEMBER)
    18: BELT-TYPE CONTINUOUSLY VARIABLE TRANSMISSION
    29: BOWL-SHAPED PERIPHERAL WALL
    68: VEHICLE FRONT WALL
    70: VEHICLE UPPER WALL
    72: RIB (RIGIDITY INCREASING SECTION)
    74: MASS (MASS SECTION, MASS BODY)

**Claims**

1. A power transmission system for a vehicle including a bowl-shaped peripheral wall (29) for housing a power transmission member (14), **characterized in that**
   a rigidity increasing section (72) and a mass section (74) are alternately provided in a circumferential direction on the bowl-shaped peripheral wall (29) and the rigidity increasing section (72) and the mass section (74) are alternately provided in the portions that serve as the vibration antinodes of the circular standing wave mode.

2. The power transmission system for a vehicle according to claim 1, wherein
   the rigidity increasing section (72) is a rib that is provided on a surface of the bowl-shaped peripheral wall (29), and

the mass section (74) is a mass body provided on the surface of the bowl-shaped peripheral wall (29).

3. The power transmission system for a vehicle according to claim 1 or 2, wherein
the bowl-shaped peripheral wall (29) constitutes a torque converter housing that houses a torque converter (14) that is connected to a belt-type continuously variable transmission (18) so as to enable power transmission,
the rigidity increasing section (72) is provided on a vehicle upper wall (70) of the torque converter housing, and
the mass section (74) is provided on a vehicle front wall (68) of the torque converter housing.

4. The power transmission system for a vehicle according to any one of claims 1 to 3, wherein
the rigidity increasing section (72) or the mass section (74) is provided on an outer peripheral surface of the bowl-shaped peripheral wall (29).

5. The power transmission system for a vehicle according to claim 3, wherein
the rigidity increasing section (72) is provided on a vehicle lower wall of the torque converter housing, and the mass section (74) is provided on a vehicle rear wall of the torque converter housing.

**Patentansprüche**

1. Leistungsübertragungssystem für ein Fahrzeug mit einer schüsselförmigen Umfangswand (29) zum Aufnehmen eines Leistungsübertragungsbauteils (14),
**dadurch gekennzeichnet, dass**
ein Steifigkeit steigernder Bereich (72) und ein Massebereich (74) abwechselnd in einer Umfangsrichtung an der schüsselförmigen Umfangswand vorgesehen sind, und
der Steifigkeit steigernde Bereich (72) und der Massebereich (74) abwechselnd in den Abschnitten vorgesehen sind, die als die Schwingungsbäuche der Mode einer ringförmigen stehenden Welle dienen.

2. Leistungsübertragungssystem für ein Fahrzeug nach Anspruch 1, wobei
der Steifigkeit steigernde Bereich (72) eine Rippe ist, die an einer Oberfläche der schüsselförmigen Umfangswand (29) vorgesehen ist, und
der Massebereich (74) ein Massekörper ist, der an der Oberfläche der schüsselförmigen Umfangswand (29) vorgesehen ist.

3. Leistungsübertragungssystem für ein Fahrzeug nach Anspruch 1 oder 2, wobei
die schüsselförmige Umfangswand (29) ein Drehmomentwandlergehäuse bildet, das einen Drehmomentwandler (14) aufnimmt, der mit einem stufenlos variablen Getriebe (18) der Riemenbauart verbunden ist, um eine Leistungsübertragung zu ermöglichen,
der Steifigkeit steigernde Bereich (72) an einer Fahrzeugoberwand (70) des Drehmomentwandlergehäuses vorgesehen ist, und
der Massebereich (74) an einer Fahrzeugfrontwand (68) des Drehmomentwandlergehäuses vorgesehen ist.

4. Leistungsübertragungssystem für ein Fahrzeug nach einem der Ansprüche 1 bis 3, wobei
der Steifigkeit steigernde Bereich (72) oder der Massebereich (74) an einer Außenumfangsfläche der schüsselförmigen Umfangswand (29) vorgesehen ist.

5. Leistungsübertragungssystem für ein Fahrzeug nach Anspruch 3, wobei
der Steifigkeit steigernde Bereich (72) an einer Fahrzeugunterwand des Drehmomentwandlergehäuses vorgesehen ist, und der Massebereich (74) an einer Fahrzeugrückwand des Drehmomentwandlergehäuses vorgesehen ist.

**Revendications**

1. Système de transmission de puissance pour un véhicule incluant une paroi périphérique en forme de coupe (29) pour loger un élément de transmission de puissance (14), **caractérisé en ce que**
une section d'augmentation de rigidité (72) et une section de masse (74) sont placées alternativement dans une direction circonférentielle sur la paroi périphérique en forme de coupe (29) et
la section d'augmentation de rigidité (72) et la section de masse (74) sont placées alternativement dans des parties qui servent d'anti-noeuds de vibration du mode d'ondes stationnaires circulaires.

2. Système de transmission de puissance pour un véhicule selon la revendication 1, dans lequel
la section d'augmentation de rigidité (72) est une nervure qui est placée sur une surface de la paroi périphérique en forme de coupe (29), et
la section de masse (74) est un corps de masse placé sur la surface de la paroi périphérique en forme de coupe (29).

3. Système de transmission de puissance pour un véhicule selon la revendication 1 ou 2, dans lequel
la paroi périphérique en forme de coupe (29) constitue un logement de convertisseur de couple qui loge un convertisseur de couple (14) qui est connecté à une transmission continument variable du type à courroie (18) de façon à permettre la transmission de puissance,
la section d'augmentation de rigidité (72) est placée sur une paroi supérieure de véhicule (70) du logement de convertisseur de couple, et
la section de masse (74) est placée sur une paroi avant de véhicule (68) du logement de convertisseur de couple.

4. Système de transmission de puissance pour un véhicule selon l'une quelconque des revendications 1 à 3, dans lequel
la section d'augmentation de rigidité (72) ou la section de masse (74) est placée sur une surface périphérique extérieure de la paroi périphérique en forme de coupe (29).

5. Système de transmission de puissance pour un véhicule selon la revendication 3, dans lequel
la section d'augmentation de rigidité (72) est placée sur une paroi inférieure de véhicule du logement de convertisseur de couple, et la section de masse (74) est placée sur une paroi arrière de véhicule du logement de convertisseur de couple.

# FIG. 1

FIG. 2A

29(11a)

FIG. 2B

29(11a)

FIG. 3

# FIG. 4

# FIG. 5

# FIG. 6

**EP 2 733 388 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090241727 A1
- JP 2009024764 A